# EUROPÄISCHE PATENTANMELDUNG

(11) **EP 0 922 805 A1**
(43) Veröffentlichungstag der Anmeldung: **16.06.1999**
(21) Anmeldenummer: 98122433.0
(22) Anmeldetag: 26.11.1998
(51) Int. Cl.: D21F 3/02, D21F 3/08

(54) **Verfahren und Vorrichtung zur Herstellung von dehnungsstabilen, flüssigkeitsundurchlässigen, biegsamen Pressmänteln, insbesondere für Schuhpressen von Papiermaschinen**

(30) Priorität: 09.12.1997 DE 19754631
(71) Anmelder: Scapa Forming GmbH, 89522 Heidenheim (DE)
(72) Erfinder: Schön, Werner A., 89518 Heidenheim (DE)
(74) Vertreter: Kern, Wolfgang, Dipl.-Ing.

(57) **Zusammenfassung**

Die Erfindung betrifft ein Verfahren zur Herstellung zur Herstellung von dehnungsstabilen, flüssigkeitsundurchlässigen biegsamen, insbesondere für mit einem verlängerten Preßspalt versehene Schuhpressen von Papiermaschinen geeigneten, elastischen Preßmänteln, bei dem eine fließfähige Mischung eines Prepolymers auf die Substrat aufgegossen wird, das mittels einer Distanzeinrichtung über einen zylindrischen Wickeldorn geführt wird und dabei von dessen Oberfläche in einem einstellbaren Abstand gehalten und mittels einer Beschichtungseinrichtung mit dem fließfähigen Prepolymer in diesem Abstand von der Wickeldornoberfläche beschichtet wird, und wobei während der Beschichtung des Substrats Fäden in Drehrichtung des Wickeldorn auf dem Substrats abgelegt und mit der Prepolymermasse beschichtet werden.

Um derartige Preßmäntel im Hinblick auf ihre Festigkeit und ihre betriebliche Nutzungsdauer noch weiter zu verbessern wird erfindungsgemäß vorgeschlagen, daß als Substrat ein über die Oberfläche des Wickeldorns gespanntes Gitter, Gewirk, Gestrick oder dgl. verwendet wird, das aus nicht miteinander verwebten Fäden besteht, die schräg zur Preßmantellängsrichtung liegen und Maschen bilden, deren Weite in Abhängigkeit von insbesondere der Zähigkeit der Prepolymermasse so gewählt wird, daß die Maschen von der Prepolymermasse beim Aufgießen derselben vollständig durchdrungen und die Fäden des Gitters, Gewirks, Gestricks oder dgl. vollständig von der Masse ummantelt werden und auf ihrer der Oberfläche des Wickeldorns zugewandten Seite eine in sich geschlossene, glatte Oberfläche aus Prepolymermaterial bilden, deren Dicke dem Abstand des Substrats von der Wickeldornoberfläche entspricht und die von letzterer trennbar ist.

## Beschreibung

Die Erfindung betrifft ein Verfahren zur Herstellung dehnungsstabilen, flüssigkeitsundurchlässigen, biegsamen, insbesondere für mit einem verlängerten Preßspalt vershene Schuhpressen von Papiermaschinen geeigneten, elastischen Prebmänteln gemäß Oberbegriff des Anspruchs 1. Außerdem betrifft die Erfindung eine Vorrichtung zur Herstellung derartiger Preßmäntel.

Ein solches Verfahren ist aus der DE 49 22 800 bekannt. Den mit ihm hergestellten Erzeugnissen, also Preßmäntel für Naßpressen von Papiermaschinen, haftet der Nachteil an, daß die in das Beschichtungsmaterial eingebetteten Längs- und Querfäden sich unter Druck- und Zugbeanspruchungen, denen der Preßmantel im Betrib einer solchen Naßpresse ausgesetzt ist, allmähnlich vom Beschichtungsmaterial lösen, wenn nicht vorher eine genaue Abstimmung der E-Module von Fäden, Haftvermittler und Beschichtungsmaterial durchgeführt wurde, die aber schwierig ist. Außerdem verändern sich die E-Module durch Alterung. Es kommt zu dem sog. Tunnelungseffekt, bei dem die Fäden sich unter der auf sie einwirkenden Wechselspannung um sich herum Hohlräume schaffen, die die Festigkeit des Mantels und damit auch seine Laufzeitdauer erheblicher mindern und in diesem Zusammenhang insbesondere die ursprüngliche Dehunungsstabilität des Mantels beseitigen.

Darüber hinaus treten Preßmänteln, die nach dem bekannten Verfahren hergestellt werden, im Betrieb oftmals Störfälle auf, die dadurch verursacht werden, daß zusammen mit der Papierbahn im den Preßspalt (Nip) Fremdkörper eingezogen werden, die eine lokale Abbremsung des Preßmantels im Schuh bewirken, während des elastische Filztuch die nicht abgebremsten Bereiche des Preßmantels weiterzieht. Dadurch wird aber der Preßmantel im Bereich der Störstelle gewöhnlich so stark verformt, daß er schräg aufreißt, sobald die Verformungskräfte von ihm nicht mehr aufgenommen werden können.

Die Aufgabe der Erfindung besteht deshalb darin, das Verfahren der genannten Art so weiterzubilden, daß Preßmäntel entstehen, die die verlangte hohe Festigkeit und Dehnungsstabilität auch über sehr lange Betriebszeiten beibehalten und die gegen von Fremdkörpern im Preßspalt verursachte lokale Verformungen weitgehend umempfindlich sind.

Diese Aufgabe wird erfindungsgemäß dadurch gelöst, daß als Substrat ein über die Oberfläche des Wickeldorns gespanntes Gitter, Gewirk, Gestrick, oder dgl. verwendet wird, das aus nicht miteinander verwebten Fäden besteht, die schräg zur Preßmantellängsrichtung liegen und Maschen bilden, deren Weite in Abhängigkeit von insbesondere der Zähigkeit der Prepolymermasse so gewählt wird, daß die Maschen von der Prepolymermasse beim Aufgießen derselben vollständig durchdrungen und die Fäden des Gitters, Gewirks, Gestricks oder dgl. vollständig von der Masse ummantelt werden und auf ihrer der Oberfläche des Wickeldoms zugewandten Seite eine in sich geschlossene, glatte Oberfläche aus Prepolymermaterial bilden, deren Dicke dem Abstand des Substrats von der Wickeldornoberfläche entspricht und die von letzterer trennbar ist.

Durch diese Lage des Gitters, Gewirks, Gestricks o. dgl. innerhalb des Preßmantels in Bezug auf die Laufrichtung des Mantels sowie durch die Tatsache, daß die Fäden, aus denen derartige Gitter, Gewirke, Gestricke o. dgl. bestehen, miteinander zwar verbunden, jedoch nicht verwebt sind, ist das elastische Verhalten des Preßmantels im Betrieb wesentlich verbessert, so daß es zur Ausbildung eines Spannungsprofils kommt, das Spannungsspitzen vermeidet und im Gegensatz zu dem Spannungsprofil der herkömmlichen Preßmäntel wesentlich einheitlicher und gleichmäßiger ist und dabei auf einem niedrigeren Niveau liegt. Dies hat zur Folge, daß sich die Quer- und Längsfäden des Substrates, die in bezug auf die Laufrichtung des Mantels nicht mehr parallel bzw. rechtwinklig liegen, sondern etwa diagonal, aus der sie umgebenden Beschichtungsmasse, beispielsweise Polyurethan, auch nach langer Betriebszeit nicht lösen, sondern im der Beschichtungsmasse fest eingebunden bleiben, so daß Rißbildungen im den Mänteln auch dann vollständig vermieden werden, wenn geh Störfälle durch Fremdkörper einstellen. Vorteilhafte Ausgestaltungen der Erfindung sind in den Unteransprüchen gekennzeichnet.

Gemäß einer vorteilhaften Ausgestaltung des Erfindungsvorschlags wird das Substrat schlauchförmig ausgebildet und in einer Einspannvorrichtung an den beiden Stirnseiten des Wickeldorns befestigt und mit einer Spannvorrichtung axial gespannt. Dabei wird mit Hilfe eines Distanzrings das Substrat beim Beschichten in dem gewünschten Abstand von der Wickeldornoberfläche gehalten.

Für das spiralförmige Aufwickeln der Fäden auf das Substrat beim Beschichten desselben durch Aufgießen des Prepolymers auf die Substratoberfläche werden vorzugsweise multifile Fäden benutzt, wodurch die gewünschte Festigkeit des Mantels in Umfangsrichtung erreicht wird. Auch können die Fäden, aus denen das Substrat, also das Gitter, Gewirk, Gestrick oder dgl. selbst besteht, vorteilhafterweise multifile Kunstoffäden sein, um die gewünschte Dehnungsstabilität des Mantels erreichen.

Nach dem Vergießen des Prepolymermaterials und seiner Verfestigung auf der Wickeldornoberfläche läßt sich der entstandene Preßmantel, vorteilhafterweise noch bevor er von der Oberfläche abgezogen wird, durch Überdrehen zur Herstellung der gewünschten Dicke oder Oberflächengüte mechanisch bearbeiten Bei dieser Gelegenheit lassen sich, falls gewünscht, in die Preßmanteloberfläche auch Hohlräume und/oder Vertiefungen zur Flüssigkeitsabfuhr einarbeiten.

Weitere vorteilhafte Ausgestaltungen der Erfindung sind in den Unteransprüchen gekennzeichnet.

Das erfindungsgemäße Verfahren und die zu seiner Durchfuhrung dienende Vorrichtung werden anhand der in der Zeichnung dargestellten Ausführungsbeispiele näher erläutert. In der Zeichnung zeigen:
- Fig. 1: eine schematische perspektivische Draufsicht auf einen Wickeldorn, über den ein Substrat in Form eines aus Fäden bestehenden schlauchförmigen Gitters gespannt ist, das unter Zuführung von Fäden mit einem Prepolymer zu beschichten ist,
- Fig. 2: eine schematische Längsschrittansicht einer Wickeldornvorrichtung, mit stirnseitigen Spannringen für das zu beschichtende und zu bewickelnde Substrat,
- Fig. 3 und Fig. 4: schematische Draufsichten von gitterförmigen Gebilden, die als Substrat Verwendung finden und aus monofilen und/oder multifilen Fäden bestehen, und
- Fig. 5: eine schematische Draufsicht einer Masche eines Gitters der in den Fig. 3 und 4 gezeigten Art in verschiedenen Längs- und Querdehnungszuständen, wie sie im über die Oberfläche des Wickeldorn elastisch gespannten Zustand des schlauchförmigen Gitters, Gewirks oder Gestricks auftreten.

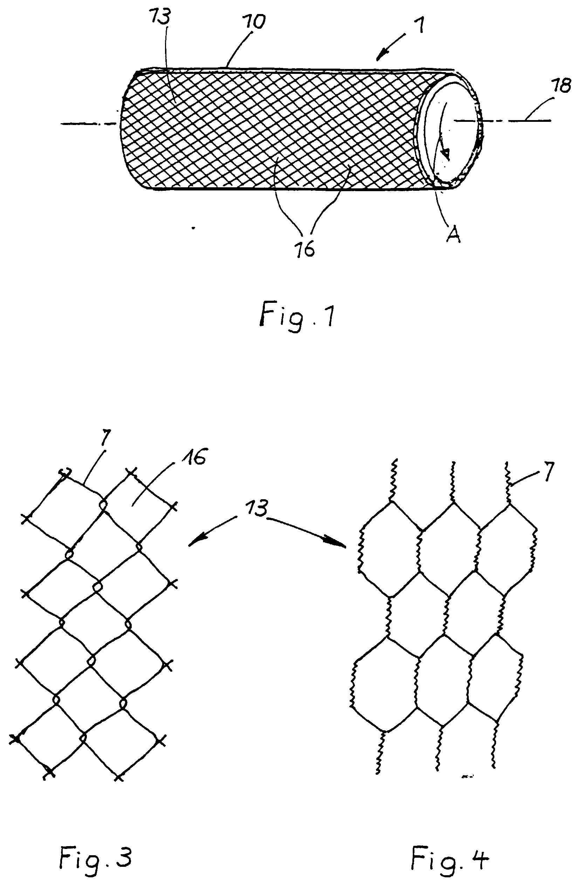

Der in Fig. 1 dargestellte Wickeldorn in Form einer zylindrischen Walze dient in Verbindung mit weiteren Vorrichtungselementen, die aus Fig. 2 ersichtlich sind, zur Herstellung von dehnungsstabilen, flüssigkeitsundurchlässigen, biegsamen, elastischen Preßmänteln, die insbesondere für mit einem verlängerten Preßspalt versehene Schuhpressen von Papiermaschinen geeignet sind Deratige Preßmäntel, die wenigstens auf ihrer der Faserbahn bzw. dem oder den Filztüchern zugewandten Außenseite zur Flüssigkeitsabführung Hohlräume und/oder Vertiefungen aufweisen, werden hergestellt, indem eine fließfähige Mischung eines Prepolymers auf ein Substrat 10 mittels einer nicht gezeigten Düse und Beschichtungseinrichtung aufgegossen wird, das durch eine Distanzeinrichtung in Form eines in Fig. 2 gezeigten Distanzrings 11 in einem mit Hilfe dieses Distanzringes einstellbaren Abstand von der zylindrischen Oberfläche 2 des Wickeldorns gehalten wird Vor dieser Beschichtung werden auf dem Substrat 10, das in Form eines Gitters 13 (Fig. 3 und 4) oder Gewirks oder Gestricks oder dgl. vorliegt, bestehend aus mono- oder multifilen Kunststoffäden 7, Drehrichtung A des Wickeldorns 1, spiralförmig mono- oder multifilen Fäden 15 abgelegt, die dann mit dem Prepolymer 14 beschichtet werden. Das Substrat ist membranartig über Oberfläche des Wickeldorns 1 gespannt, und seine Fäden 7 verlaufen schräg oder diagonal zur Preßmantellängsrichtung.

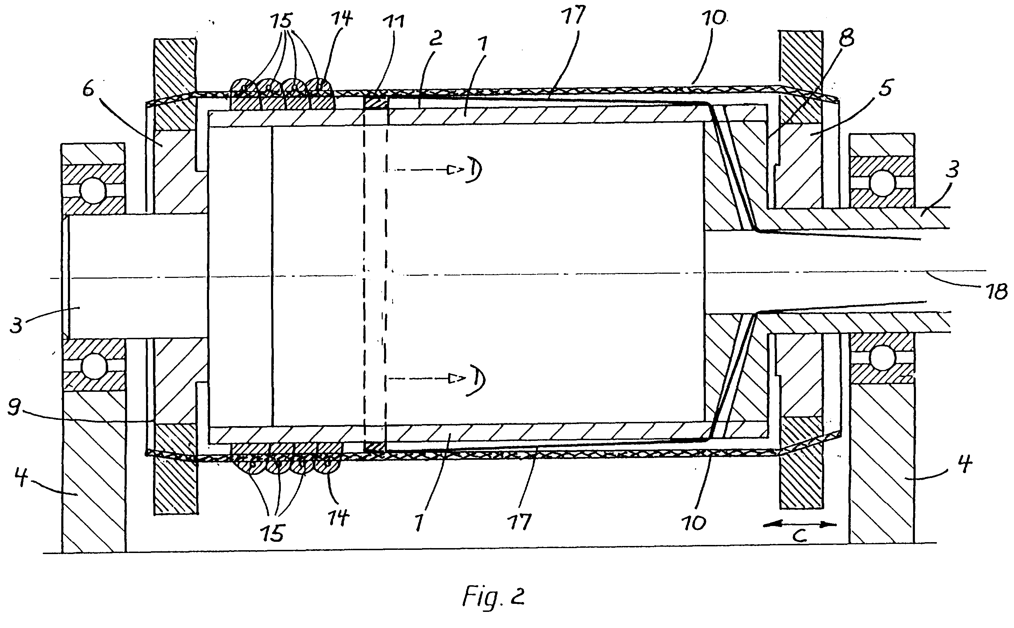

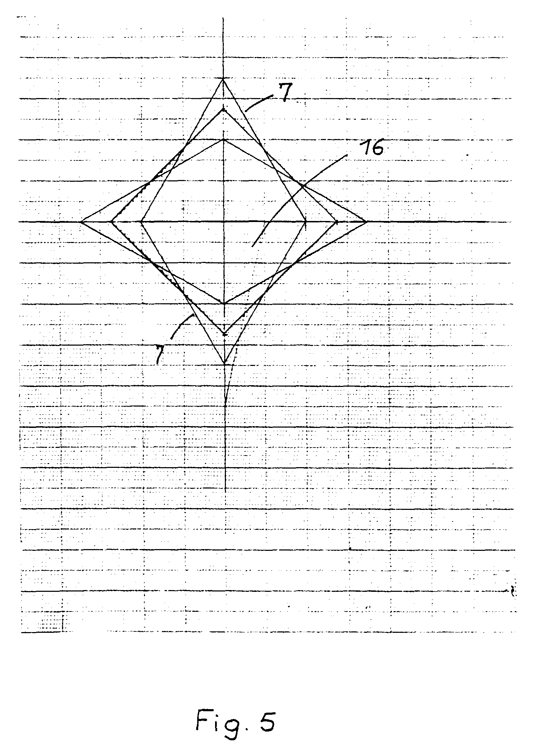

Das Gitter 13 besteht somit aus einer Vielzahl von durch die Fäden 7 gebildeten Maschen 16, die allerdings keine Webmaschen sind, also nicht von Kett- und Schußfäden gebildet werden. Die Maschenweite ist in Abhängigkeit insbesondere der Zähigkeit t der Prepolymermasse so gewählt, daß die Maschen von der Prepolymermasse vollständig durchdrungen und die Fäden vollständig von dieser Masse ummantelt werde Auf diese Weise entsteht auf der der Oberfläche 2 der dem Wickeldorn zugewandten Seite des Substrats 10 eine in sich geschlossene, glatte Oberflächenschicht aus Prepolymermaterial, deren Schichtdicke dem durch den Distanzring 11 vorgegebenen Abstand entspricht. Die Maschenweite beträgt vorteilhafterweise 4 bis 6 mm. Als Material für die Fäden 7 des Substrats haben sich Polyamid und Polyester aber auch Keflar® und Dyneema®, letzere wegen ihrer hohen Festigkeit, besonders bewährt. Die erforderliche elastisch Dehnung des Substrats wird durch die Art der Kopplung der Fäden 7 miteinander sichergestellt, die in den Fig. 3 und 4 beispielhaft gezeigt ist und Fig. 5 am Bild einer Masche verdeutlicht wird.

Nach der erfolgten Verfestigung dieses Prepolymermaterials auf der Wickeldornoberfläche wird der so entstandene Preßmantel durch eine mechanische Bearbeitung, nämlich beispielsweise Überdrehen, auf die gewünschte Dicke gebracht, wobei auch die gewünschte Oberflächengüte geschaffen wird. Danach wird der Preßmantel, der auf seiner Oberfläche auch noch mit Blindbohrungen, Rillen oder Nuten versehen werden kann, um seiner späteren Aufgabe der Entwässerung von Faserbahnen bzw. Filztüchern von Papiermaschinen gerecht zu werden, mittels einer Abziehvorrichtung vom Wickeldorn abgezogen.

Wie aus Fig. 2 ersichtlich, sind an den beiden Stirnseiten 8, 9 des Wickeldorns je ein Spannring 5, 6 auf der den Wickeldorn tragenden Welle 3 angeordnet, die das schlauchförmige Substrat 10 gedehnt halten, und zwar in dem durch den Distanzring 11 vorgegebenen gewünschten Abstand von der Oberfläche 2. Zu diesem Zweck ist der eine Spannring 5 auf der Welle 3, die in den Lagern 4 geführt ist, axial beweglich angeordnet, wie durch den Doppelpfeil C angezeigt, während der andere Sapnnring 6 auf der Weile 3 axial festliegt. Der Distanzring 11 wird mit Hilfe einer Zugvorrichtung 17 in Richtung der Pfeile D mit dem Fortschreiten der mittels der nicht dargestellten Düse auf das Substrat spiralförmig aufgetragenen Beschichtungsmasse axial weiterbewegt.

Die auf das Substrat aufzuwickelden Fäden 15 verlaufen unter einem Winkel schräg zur Preßmantellängsrichtung und werden somit ebenfalls spiralförmig auf das Substrat aufgewickelt. Sie können wie die die Maschen 16 bildenden Fäden 7 des Gitters 13, Gewirks oder Gestricks multifile Kunstoffäden sein.

Durch diese Verfahrensweise bei der Herstellung der Preßmäntel mit Hilfe eines Gitters, Gewirks, Gestricks oder dgl. als Substrat, dessen Fäden schräg bzw. diagonal zur Laufrichtung des Preßmantels und damit schräg zur Längsachse 18 des Wickeldorns liegen, wird die Festigkeit und Dehnungsstabilität der Mäntel gegenüber der herkömmlichen Verfahrensweise, bei der anstelle eines derartigen Substrat parallele, in Preßmantellängsrichtung verlaufende Fäden in die Beschichtungsmasse eingebaut werden, erheblich gesteigert, wobei durch das spiralförmige Aufwickeln der Fäden bei der Beschichtung die erforderliche Stabilität in Umfängsrichtung erzielt wird. Auf diese Weise wird die Lebensdauer derartiger Preßmäntel wesentlich verlängert, da die Ausbildung von Spannungsspitzen im Betriebszustand vermieden wird, das Spannungsprofil also über den Querschnitt des Preßmantels gleichmäßiger verläuft und auf einem niedrigeren Niveau liegt. Deshalb bleiben die Kunststoffäden in der Beschichtungsmasse auch sehr viel länger fest eingebunden als bei bekannten Preßmänteln, und letzlere sind gegenüber Fremdkörpern, die in den Preßspalt (Nip) eingezogen werden können, weitgehend unempfindlich, reißen also nicht mehr auf wie die herkömmlichen Preßmäntel.

## Patentansprüche

1. Verfahren zur Herstellung von dehnungsstabilen, flüssigkeitsundurchlässigen, biegsamen, insbesondere für mit einem verlängerten Preßspalt versehene Schuhpressen von Papiermaschinen geeigneten, elastischen Preßmänteln, bei dem fließfähige Mischung eines Prepolymers auf ein Substrat aufgegossen wird, das mittels einer Distanzeinrichtung über einen zylindrischen Wickeldorn geführt wird und dabei von dessen Oberfläche in einem einstellbaren Abstand gehalten und mittels einer Beschichtungseinrichtung mit dem fließfähigen Prepolymer in diesem Abstand von der Wickeldornoberfläche beschichtet wird, und wobei während der Beschichtung des Substrats Fäden in Drehrichtung des Wickeldorn auf dem Substrat abgelegt und mit der Prepolymermasse beschichtet werden, **dadurch gekennzeichnet, daß** als Substrat ein über die Oberfläche des Wickeldorns gespanntes Gitter, Gewirk, Gestrick oder dgl. verwendet wird, das aus nicht miteinander verwebten Fäden besteht, die schräg zur Preßmantellängsrichtung liegen und Maschen bilden, deren Weite in Abhängigkeit von insbesondere der Zähigkeit der Prepolymermasse so gewählt wird daß die Maschen von der Prepolymermasse beim Aufgießen derselben vollständig durchdrungen und die Fäden des Gitters, Gewirks, Gestricks oder dgl. vollständig von der Masse ummantelt werden und auf ihrer der Oberfläche des Wickeldorns zugewandten Seite eine in sich geschlossene, glatte Oberfläche aus Prepolymermaterial bilden, deren Dicke dem Abstand des Substrats von der Wickeldornoberfläche entspricht und die von letzterer trennbar ist.

2. Verfahren nach Anspruch 1, **dadurch gekennzeichnet, daß** das Substrat vor seiner Beschichtung in Form eines elastischen Schlauches über die Wickeldornoberfläche gezogen und in einem Abstand zu dieser gespannt gehalten wird.

3. Verfahren nach Anspruch 1 oder 2, **dadurch gekennzeichnet, daß** der Wickeldorn in Verbindung mit einer Einspannvorrichtung verwendet wird, in der das Substrat an den beiden Stirnseiten des Wickeldorns befestigt und über der Oberfläche des Wickeldorns gespannt gehalten wird.

4. Verfahren nach einem der Ansprüche 1 bis 3, **dadurch gekennzeichnet, daß** der Abstand des Substrats über der Wickeldornoberflache mit Hilfe einer über diese Oberfläche axial verschiebbaren Distanzeinrichtung aufrechterhaltern wird.

5. Verfahren nach einem der Ansprüche 1 bis 4, **dadurch gekennzeichnet, daß** die Weite der Maschen des Substrats zwischen 2 und 8 mm beträgt und so gewählt wird, daß die aufzugießende Prepolymermasse durch die Maschen hindurchläuft und sich auf der Wickeldornoberfläche absetzt.

6. Verfahren nach einem der Ansprüche 1 bis 5, **dadurch gekennzeichnet, daß** die auf das Substrat aufwickelnden Fäden spiralförmig aufgewickelt werden und damit unter einem Winkel schräg zur Preßmantellängsrichtung verlaufen.

7. Verfähren nach einem der Ansprüche 1 bis 6, **dadurch gekennzeichnet, daß** als Fäden multifile Kunstoffäden verwendet werden.

8. Verfahren nach einem der Ansprüche 1 bis 6, **dadurch gekennzeichnet, daß** als Fäden monofile Kunstoffäden verwendet werden.

9. Verfähren nach einem der Ansprüche 1 bis 8, **dadurch gekennzeichnet, daß** die Fäden aus einem hochfesten Material wie Polyamid, Polyester und auch Keflar® oder Dyneema®, bestehen.

10. Verfähren nach einem der Ansprüche 1 bis 9, **dadurch gekennzeichnet, daß** nach der Verfestigung des Prepolymermaterials auf der Wickeldornoberfläche der entstandene Preßmantel durch Überdrehen zur Herstellung der gewünschten Dicke, Oberflächengüte und Oberflächenstruktur mechanisch bearbeitet wird.

11. Verfahren nach Anspruch 10, **dadurch gekennzeichnet, daß** die Oberflächenstruktur des Preßmantels durch Herstellung von Blindbohrungen, Rillen oder Nuten für die Wasserabführung besonders ausgebildet wird.

12. Verfahren nach Anspruch 10 oder 11, **dadurch gekennzeichnet, daß** nach erfolgter mechanischer Bearbeitung des Preßmantels dieser mittels einer Abziehvorrichtung vom Wickeldorn abgezogen wird.

13. Vorrichtung zur Durchführung des Verfahrens nach einem der Ansprüche 1 bis 12, **gekennzeichnet durch** einen zylindrischen Wickeldorn (1) mit verchromter oder hochglanzpolierter Oberfläche (2), an dessen Stirnseiten (8, 9) je ein Spannring (5, 6) auf der Welle (3) des Wickeldorns angeordnet ist, der das schlauchförmige Substrat (10) gespannt hält und sich zusammen mit dem Wickeldorn bzw. seiner Weile (3) dreht und von denen der eine Spannring (6) auf der Weile (3) axial festliegt, während der andere Spannring (5) axial verschiebbar ist und das Substrat über der Oberfläche (2) in einem durch einen axial ebenfalls verschiebbaren Spannring (11) vorgegebenen Abstand von dieser während der Beschichtung mit dem Prepolymaterial gespannt hält.

14. Dehnungsstabiler, flüssigkeitsundurchlässiger, biegsammer Preßmantel, insbesondere für Schuhpressen von Papiermaschinen, **dadurch gekennzeichnet, daß** der Preßmantel aus einem schlauchförmigen Substrat (10) gefertigt ist, bestehend aus einem Gitter, Gewirk, Gestrick oder dgl. dessen Fäden (7) nicht miteinander verwebt sind und in Längs- und Querrichtung des Preßmantels dehnbare Maschen (16) bilden, die von einer auf das Substrat aufgebrachten Prepolymermasse vollständig bedeckt werden, derart, daß das beschichtete Substrat auch auf der dem Preßschuh zugewandten Oberfläche mit einer Prepolymerschicht versehen ist, wobei die dem Preschuh abgewandte Oberfläche des Substrats mit wenigstens einem in das Beschichtungsmaterial eingebauten, spirahförmig aufgewickelten monofilen oder multifilen Faden versehen ist.

15. Preßmantel nach Anspruch 14, **dadurch gekennzeichnet, daß** das Substrat aus mehreren übereinanderliegenden Lagen eines Gitters, Gewirks, Gestricks oder dgl. besteht, dessen Fäden Maschen bilden, die aus nicht miteinander verwebten Fäden bestehen.
